# FASCICULE DE BREVET EUROPEEN

(11) **EP 2 931 528 B1**
(45) Date de publication et mention de la délivrance du brevet: **23.08.2017**
(21) Numéro de dépôt: 13818268.8
(22) Date de dépôt: 09.12.2013
(51) Int. Cl.: B60B 33/02, B60B 33/06, B66F 9/075, B62D 49/08, B60G 3/02

(54) **SYSTEME DE STABILISATION DE VEHICULE MOBILE**
STABILISIERUNGSSYSTEM FÜR EIN BEWEGTES FAHRZEUG
MOVING VEHICLE STABILISATION SYSTEM

(30) Priorité: 11.12.2012 FR 1261868
(43) Date de publication de la demande: 21.10.2015
(73) Titulaire: Warner Electric Europe SAS, 49124 St-Barthélémy d'Anjou (FR)
(72) Inventeur: RAIMBAULT, Jérémy, 49120 Chemillé (FR)
(74) Mandataire: CAPRI
(86) Numéro de dépôt international: PCT/FR2013/052999
(87) Numéro de publication internationale: WO 2014/091132

(56) Documents cités:
- EP-A1- 2 354 078
- WO-A1-2007/052791
- DE-A1-102004 030 113
- US-A1- 2001 032 765

## Description

La présente invention concerne un système de stabilisation de véhicule mobile selon le préambule de la revendication 1. Un système de ce type est connu du document DE 102004030113 A1. Les systèmes de stabilisation de véhicule mobile sont bien connus. Ils assurent notamment la stabilité d'un véhicule mobile en pilotant des appuis rétractables à la demande. Par exemple, sur des chariots élévateurs à trois points d'appui, deux roues additionnelles peuvent être placées de part et d'autre de la roue motrice et peuvent être bloquées en position pour créer un ou des appuis supplémentaires.

Il existe plusieurs types de systèmes de stabilisation dans l'état de la technique.

La conception la plus basique consiste à utiliser un stabilisateur souple formé d'une combinaison de ressort et d'élément amortissant (plot élastomère ou vérin) assurant un compromis entre la raideur et la réponse en translation du stabilisateur. Un tel système est par exemple décrit dans le document DE102009053160A1.

Une autre solution consiste à utiliser un stabilisateur hydraulique « tout ou rien » comportant des pistons hydrauliques liés à la partie mobile en translation du stabilisateur. Ce type de système utilise un actionnement hydraulique par électrovanne qui bloque la circulation d'huile et donc le déplacement vertical du piston, rendant le stabilisateur rigide. Ce type de système est notamment décrit dans les documents EP1172277A1 ou DE102004030113A1. Ces systèmes ne permettent cependant pas de faire varier la raideur du stabilisateur.

Une autre variante existante consiste à utiliser un stabilisateur hydraulique « piloté », qui prévoit de piloter la pression exercée dans les vérins hydrauliques pour modifier la raideur du stabilisateur, en fonction de paramètres tels que l'inclinaison du véhicule ou de sa charge (voir notamment EP0454474A1 ou JP7187025). Ce type de système exige cependant une installation hydraulique complexe.

Une autre solution existante consiste à utiliser des stabilisateurs latéraux fixes, et à suspendre la roue motrice avec sa motorisation. Le document EP2354078A1 décrit un tel système. L'inconvénient de ce dispositif réside principalement dans la difficulté de maintenir une pression suffisante sur la roue motrice, afin de garder une bonne adhérence, en cas de freinage notamment.

Les documents WO2007052791A1 et US2001032765 décrivent d'autres dispositifs de l'art antérieur.

La présente invention a pour but de fournir un système de stabilisation de véhicule mobile qui ne reproduit pas les inconvénients susmentionnés.

La présente invention a aussi pour but de fournir un système de stabilisation de véhicule mobile qui soit fiable en utilisation.

La présente invention a aussi pour but de fournir un système de stabilisation de véhicule mobile qui soit simple et peu coûteux à fabriquer et à assembler.

La présente invention a donc pour objet un système de stabilisation de véhicule mobile, comportant au moins une roue de stabilisation déplaçable entre une position rétractée et une position déployée, un élément support associé à ladite roue de stabilisation, qui relie de manière déplaçable ladite au moins une roue de stabilisation d'une part à un châssis et d'autre part à un organe de guidage déplaçable en translation, caractérisé en ce que ledit système comporte une vis à billes comprenant un arbre rotatif associé à un écrou à billes, ladite vis à billes coopérant avec ledit organe de guidage déplaçable en translation de telle sorte qu'un déplacement en translation dudit organe de guidage est transformé en une rotation dudit arbre rotatif et vice-versa, au moins un dispositif de freinage d'arbre étant prévu pour freiner et/ou bloquer la rotation dudit arbre rotatif.

Avantageusement, ledit organe de guidage coulisse en translation dans ledit châssis.

Avantageusement, ledit organe de guidage est relié audit élément support par au moins une bielle.

Avantageusement, ladite bielle est montée pivotante sur ledit élément support et/ou sur ledit organe de guidage.

Avantageusement, ledit élément support comporte au moins un organe de connexion rigide, tel qu'une tige ou un essieu.

Avantageusement, le système comporte un ressort qui sollicite ladite roue de stabilisation vers sa position déployée.

Avantageusement, ledit ressort est disposé entre ledit organe de guidage et ledit châssis.

Avantageusement, le système comporte un amortisseur, notamment linéaire ou rotatif, pour absorber les vibrations.

Avantageusement, au moins un dispositif de freinage est en position de freinage et/ou blocage lorsqu'il est n'est pas actionné.

Avantageusement, le système comporte un premier dispositif de freinage pour bloquer et un second dispositif de freinage pour freiner ou ralentir. Avantageusement, ledit au moins un dispositif de freinage comporte un frein à pression de ressorts, un frein à appel de courant, un frein à ressort de torsion, un frein centrifuge et/ou un frein à limitation de couple mécanique.

La présente invention a aussi pour objet un véhicule mobile comportant un système de stabilisation tel que décrit ci-dessus.

Ces avantages et caractéristiques et d'autres de la présente invention apparaîtront plus clairement au cours de la description détaillée suivante, faite en référence aux dessins joints, donnés à titre d'exemples non limitatifs, et sur lesquels
Les figures 1 et 2 sont des vues schématiques de deux exemples de véhicules mobiles de l'art antérieur auxquels peut s'appliquer un système de stabilisation selon l'invention,
La figure 3 est une vue très schématique d'un système de stabilisation selon un mode de réalisation avantageux de la présente invention, en position rétractée,
La figure 4 est une vue similaire à celle de la figure 3, en position déployée,
La figure 5 est une vue similaire à celle de la figure 4, montrant une variante de réalisation avantageuse de l'invention,
La figure 6 est une vue similaire à celle de la figure 4, montrant une autre variante de réalisation avantageuse de l'invention, et
La figure 7 est une vue schématique en section transversale d'une mise en oeuvre du dispositif représenté sur la figure 6.

La présente invention sera décrite ci-après en référence à plusieurs modes de réalisation avantageux de celle-ci, mais il est entendu que d'autres modes de réalisation pourraient être envisagés.

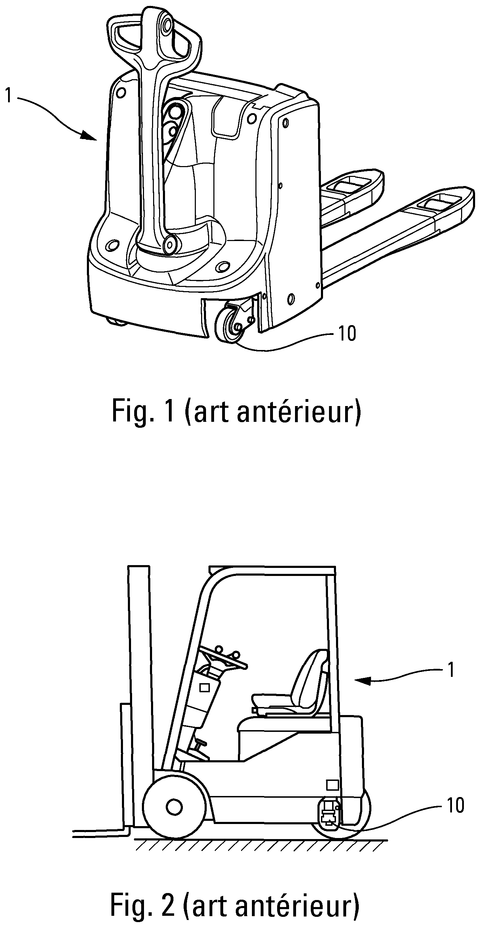

Les figures 1 et 2 représentent des véhicules mobiles 1 auxquels la présente invention peut s'appliquer. Il s'agit en particulier de chariots élévateurs, susceptibles de transporter des charges importantes, et qui peuvent rencontrer des problèmes de stabilité selon la nature et/ou le profil du sol sur lequel ils se déplacent. D'autres types de véhicules sont toutefois aussi envisageables.

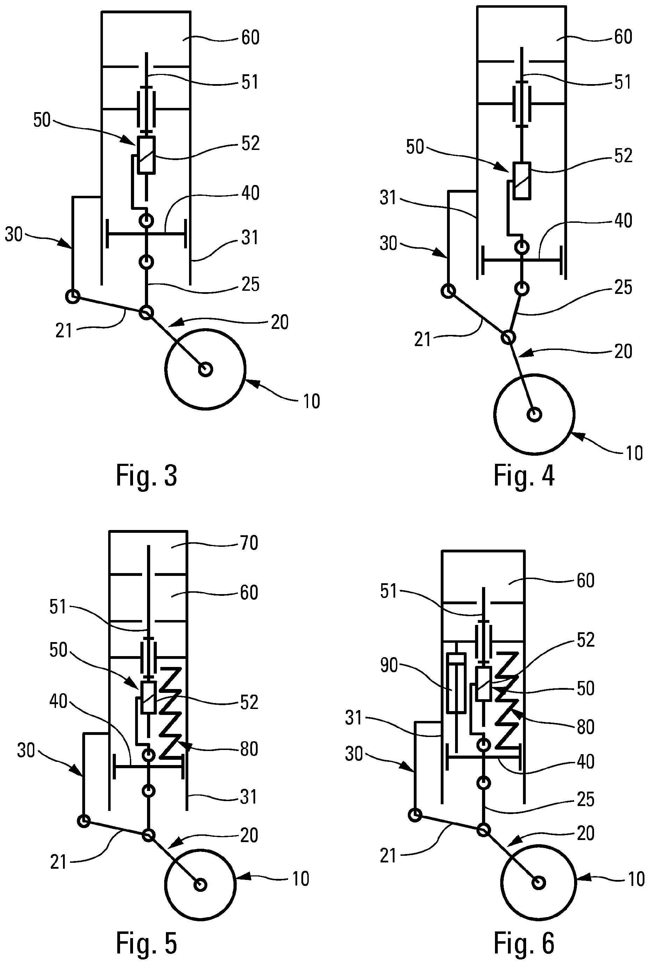

Les figures 3 et 4 illustrent de manière très schématique un mode de réalisation avantageux de la présente invention.

Dans ce mode de réalisation, la roue de stabilisation 10 est du type roue latérale non motrice d'un chariot stabilisateur tel que représenté sur les figures 1 et 2.

Cette roue de stabilisation 10 est reliée à un élément de support 20, qui comporte avantageusement un ou plusieurs organes de connexion rigides 21, tels que par exemple une ou plusieurs tiges. Cet élément de support 20 est d'une part relié de manière mobile, notamment pivotante, à ladite roue de stabilisation 10, et d'autre part il est aussi relié de manière mobile, notamment pivotante, à un châssis 30 du système de stabilisation. Typiquement, ce châssis 30 peut être fixé de manière non mobile sur le véhicule 1. Ainsi, en déplaçant ledit organe de support 20 par rapport audit châssis 30, on provoque le déplacement de ladite roue de stabilisation 10, et vice-versa. La figure 3 illustre une position rétractée de ladite roue de stabilisation 10 et la figure 4 illustre une position déployée de ladite roue de stabilisation 10. Ceci permet notamment de compenser les variations du profil de sol sur lequel se déplace le véhicule mobile 1, notamment l'inclinaison dudit profil de sol.

Le système de stabilisation comporte en outre un organe de guidage 40 déplaçable en translation, de préférence dans une partie de guidage 31 du châssis 30. Cet organe de guidage 40 est relié à ladite roue de stabilisation 10, avantageusement en étant connecté audit organe de support 20. Cette connexion peut être réalisée au moyen d'une ou plusieurs bielles 25, avantageusement montées pivotantes sur ledit organe de guidage 40 et/ou sur ledit élément de support 20.

Ainsi, un mouvement de translation dudit organe de guidage 40 est transmis à ladite roue de stabilisation 10 via ladite au moins une bielle 25 et ledit élément de support 20. Ceci permet donc un mouvement de ladite roue de stabilisation 10 entre ses positions rétractée et déployée, ce mouvement étant un mouvement de pivotement par rapport au châssis 30 dans l'exemple visible sur les figures 3 et 4.

Selon l'invention, ledit organe de guidage 40 est relié à une vis à billes 50. Typiquement, une vis à billes comporte un arbre rotatif 51 associé à un écrou à billes 52. Ainsi, un déplacement en translation dudit organe de guidage 40, et donc dudit écrou à billes 52, est transformé en une rotation dudit l'arbre rotatif 51. L'invention prévoit au moins un dispositif de freinage d'arbre 60, 70 pour freiner et/ou bloquer ledit arbre rotatif 51.

Dans l'exemple représenté sur les figures 3 et 4, la roue de stabilisation 10 reste en contact avec le sol par son propre poids. Toute modification du profil de sol provoque un déplacement de ladite roue de stabilisation 10 et donc une rotation de l'arbre rotatif 51. Ledit au moins un dispositif de freinage 60, 70 peut alors servir pour freiner ou pour bloquer ladite rotation de l'arbre rotatif 51, et donc ledit déplacement de la roue de stabilisation 10.

En variante, comme représenté sur les figures 5 à 7, un ressort 80 peut être prévu entre le châssis 30 et l'organe de guidage 40, pour solliciter la roue de stabilisation 10 vers sa position déployée, notamment pour augmenter l'appui de la roue de stabilisation 10 sur le sol.

Ledit au moins un dispositif de freinage d'arbre 60, 70 peut utiliser des freins de différents types. Il peut comporter un frein à pression de ressorts, permettant en cas de coupure de courant soit de générer un couple donnant une raideur définie au stabilisateur, soit de bloquer totalement le mouvement du stabilisateur. Il peut aussi comporter un frein à appel de courant, permettant de générer un couple proportionnel au courant, et donc d'obtenir une raideur proportionnelle qui peut aller jusqu'au blocage. Une autre variante utilise un frein centrifuge, permettant de ralentir le mouvement de rentrée du système de stabilisation, en exerçant un couple proportionnel à la vitesse de rotation. Une autre solution consiste à utiliser un frein à ressort de torsion. On peut aussi envisager un limiteur de couple mécanique, qui donne une raideur définie au système de stabilisation, le couple exercé étant alors constant et réglé mécaniquement.

La figure 5 représente une variante de réalisation, dans laquelle deux dispositifs de freinage sont utilisés : un premier frein 60 pour bloquer le système de stabilisation et un second frein 70 pour le freiner ou le ralentir. Bien entendu, selon le type de frein utilisé, un seul dispositif de freinage peut être suffisant, comme illustré sur les figures 3 et 4.

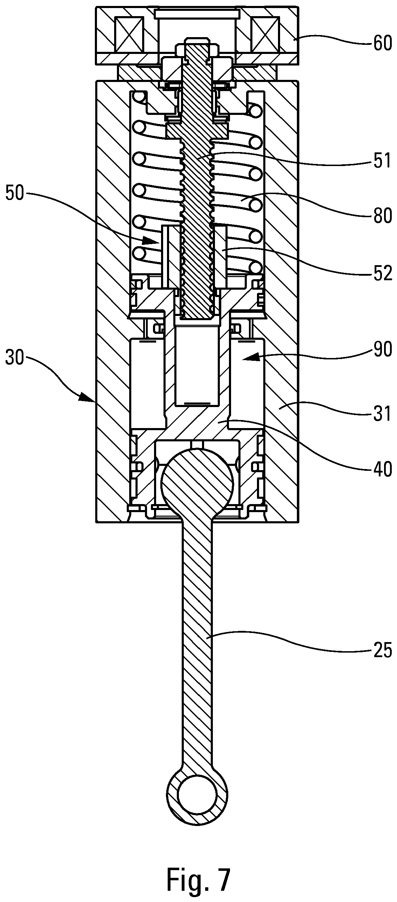

Les figures 6 et 7 illustrent une autre variante de réalisation, dans laquelle un élément de type amortisseur 90 est ajouté pour absorber les vibrations lors du déplacement. Cet amortisseur 90 peut être linéaire, comme illustré dans l'exemple représenté. De manière alternative, il pourrait être rotatif. Cet amortisseur peut se substituer à l'un des freins 60 ou 70, en particulier le frein de ralentissement. La caractéristique d'amortissement peut être différente suivant la direction du mouvement (rentrée ou sortie du système de stabilisation).

En variante aux exemples des figures 3 à 7, qui concernent plus particulièrement une roue de stabilisation latérale d'un chariot élévateur, on pourrait aussi avoir deux roues de stabilisation montées sur un essieu commun, ledit essieu étant alors connecté audit organe de guidage déplaçable en translation.

Il est à noter que la mise en oeuvre représentée sur la figure 7, qui correspond au mode de réalisation de la figure 6, pourrait aussi s'adapter aux autres modes de réalisation des figures 3 à 5, avec bien entendu les adaptations correspondants à ces différents modes de réalisation. Alors que les figures 3 à 6 sont des vues très schématiques qui montrent seulement la coopération fonctionnelle des différents éléments, la figure 7 est une vue en section transversale d'une mise en oeuvre pratique. Bien entendu, il ne s'agit que d'un exemple de réalisation, et d'autres mises en oeuvre peuvent être envisagées pour réaliser les modes de réalisations représentés de manière abstraite sur les figures 3 à 6.

La présente invention fournit donc un système de stabilisation pour véhicule mobile qui présente des avantages par rapport aux solutions existantes, notamment en terme :
- de coût : la mise en oeuvre et la maintenance sont plus simples, et donc moins onéreuses, notamment en comparaison à un dispositif hydraulique, et
- de fiabilité : l'utilisation d'un dispositif de freinage tel qu'un frein à pression de ressorts permet d'assurer une position bloquée du système de stabilisation en cas de perte d'énergie ou de défaillance. Au contraire le système hydraulique, en cas de fuite, rend le système de stabilisation inopérant.

Bien que la présente invention ait été décrite en référence à des modes de réalisation avantageux de celle-ci, il est entendu qu'un homme du métier peut y apporter toutes modifications utiles, sans sortir du cadre de la présente invention tel que défini par les revendications annexées.

## Revendications

1. Système de stabilisation de véhicule mobile (1), comportant au moins une roue de stabilisation (10) déplaçable entre une position rétractée et une position déployée, un élément support (20) associé à ladite roue de stabilisation (10), qui relie de manière déplaçable ladite au moins une roue de stabilisation (10) d'une part à un châssis (30) et d'autre part à un organe de guidage (40) déplaçable en translation, **caractérisé en ce que** ledit système comporte une vis à billes (50) comprenant un arbre rotatif (51) associé à un écrou à billes (52), ladite vis à billes (50) coopérant avec ledit organe de guidage (40) déplaçable en translation de telle sorte qu'un déplacement en translation dudit organe de guidage (40) est transformé en une rotation dudit arbre rotatif (51) et vice-versa, au moins un dispositif de freinage d'arbre (60 ; 70) étant prévu pour freiner et/ou bloquer la rotation dudit arbre rotatif (51).

2. Système selon la revendication 1, dans lequel ledit organe de guidage (40) coulisse en translation dans ledit châssis (30).

3. Système selon la revendication 1 ou la revendication 2, dans lequel ledit organe de guidage (40) est relié audit élément support (20) par au moins une bielle (25).

4. Système selon la revendication 3, dans lequel ladite bielle (25) est montée pivotante sur ledit élément support (20) et/ou sur ledit organe de guidage (40).

5. Système selon l'une quelconque des revendications précédentes, dans lequel ledit élément support (20) comporte au moins un organe de connexion rigide (21), tel qu'une tige ou un essieu.

6. Système selon l'une quelconque des revendications précédentes, comportant un ressort (80) qui sollicite ladite roue de stabilisation (10) vers sa position déployée.

7. Système selon la revendication 6, dans lequel ledit ressort (80) est disposé entre ledit organe de guidage (40) et ledit châssis (30).

8. Système selon l'une quelconque des revendications précédentes, comportant un amortisseur (90), notamment linéaire ou rotatif, pour absorber les vibrations.

9. Système selon l'une quelconque des revendications précédentes, dans lequel au moins un dispositif de freinage est en position de freinage et/ou blocage lorsqu'il est n'est pas actionné.

10. Système selon l'une quelconque des revendications précédentes, comportant un premier dispositif de freinage (60) pour bloquer et un second dispositif de freinage (70) pour freiner ou ralentir.

11. Système selon l'une quelconque des revendications précédentes, dans lequel ledit au moins un dispositif de freinage (60 ; 70) comporte un frein à pression de ressorts, un frein à appel de courant, un frein à ressort de torsion, un frein centrifuge et/ou un frein à limitation de couple mécanique.

12. Véhicule mobile (1), **caractérisé en ce qu'**il comporte un système de stabilisation selon l'une quelconque des revendications précédentes.

## Patentansprüche

1. Stabilisationssystem für ein mobiles Fahrzeug (1), aufweisend mindestens ein Stabilisationsrad (10), welches zwischen einer eingefahrenen Position und einer ausgefahrenen Position verschiebbar ist, ein dem Stabilisationsrad (10) zugeordnetes Trägerelement (20), welches das mindestens eine Stabilisationsrad (10) verschiebbar einerseits mit einem Fahrgestell (30) und andererseits mit einem linear verschiebbaren Führungsorgan (40) verbindet, **dadurch gekennzeichnet, dass** das System eine Kugelumlaufspindel (50) aufweist, umfassend eine mit einer Kugelmutter (52) verbundene Drehwelle (51), wobei die Drehwelle (51) mit dem linear verschiebbaren Führungsorgan (40) derart zusammenwirkt, dass eine lineare Verschiebung des Führungsorgans (40) in eine Drehung der Drehwelle (51) umgewandelt wird und umgekehrt, wobei mindestens eine Wellenbremsvorrichtung (60; 70) vorgesehen ist, um die Drehung der Drehwelle (51) zu bremsen und/oder zu blockieren.

2. System nach Anspruch 1, wobei das Führungsorgan (40) linear in dem Fahrgestell (30) gleitet.

3. System nach Anspruch 1 oder nach Anspruch 2, wobei das Führungsorgan (40) durch mindestens eine Kuppelstange (25) mit dem Trägerelement (20) verbunden ist.

4. System nach Anspruch 3, wobei die Kuppelstange (25) schwenkbar auf dem Trägerelement (20) und/oder auf dem Führungsorgan (40) montiert ist.

5. System nach einem der vorhergehenden Ansprüche, wobei das Trägerelement (20) mindestens ein starres Verbindungsorgan (21) aufweist, wie eine Stange oder eine Achse.

6. System nach einem der vorhergehenden Ansprüche, aufweisend eine Feder (80), die das Stabilisationsrad (10) in seine ausgefahrene Position vorspannt.

7. System nach Anspruch 6, wobei die Feder (80) zwischen dem Führungsorgan (40) und dem Fahrgestell (30) angeordnet ist.

8. System nach einem der vorhergehenden Ansprüche, aufweisend eine Dämpfungsvorrichtung (90), insbesondere linear oder drehend, um die Vibrationen aufzunehmen.

9. System nach einem der vorhergehenden Ansprüche, wobei sich die mindestens eine Bremsvorrichtung in der Brems- und/oder Blockierposition befindet, wenn sie nicht betätigt wird.

10. System nach einem der vorhergehenden Ansprüche, aufweisend eine erste Bremsvorrichtung (60) zum Blockieren und eine zweite Bremsvorrichtung (70) zum Bremsen oder Verlangsamen.

11. System nach einem der vorhergehenden Ansprüche, wobei die mindestens eine Bremsvorrichtung (60; 70) eine Federdruckbremse, eine Wirbelstrombremse, eine Verdrehungsfederbremse, eine Zentrifugenbremse und/oder eine mechanische Drehmoment-begrenzende Bremse aufweist.

12. Mobiles Fahrzeug (1), **dadurch gekennzeichnet, dass** es ein Stabilisationssystem nach einem der vorhergehenden Ansprüche aufweist.

## Claims

1. A mobile vehicle stabilization system (1), including at least one stabilizing wheel (10) which is displaceable between a retracted position and a deployed position, a support element (20) associated with said stabilization wheel (10) which connects in a displaceable manner said at least one stabilization wheel (10) on the one hand to a chassis (30) and on the other hand to a guidance member (40), displaceable in translation, **characterized in that** said system includes a ball screw (50) comprising a rotary shaft (51) associated with a ball nut (52), said ball screw (50) cooperating with said guidance member (40) displaceable in translation in such a manner that a displacement in translation of said guidance member (40) is transformed into a rotation of said rotary shaft (51) and vice versa, at least one shaft braking device (60 ; 70) being provided for braking and/or blocking the rotation of said rotary shaft (51).

2. The system according to claim 1, wherein said guidance member (40) slides in translation in said chassis (30).

3. The system according to claim 1 or claim 2, wherein said guidance member (40) is connected to said support element (20) by at least one connecting rod (25).

4. The system according to claim 3, wherein said connecting rod (25) is mounted pivotally on said support element (20) and/or on said guidance member (40).

5. The system according to any one of the foregoing claims, wherein said support element (20) includes at least one rigid connecting member (21), such as a rod or an axle.

6. The system according to any one of the foregoing claims, including a spring (80) which urges said stabilization wheel (10) toward its deployed position.

7. The system according to claim 6, wherein said spring (80) is positioned between said guidance member (40) and said chassis (30).

8. The system according to any one of the foregoing claims, including a damper (90), particularly linear or rotary, for absorbing vibrations.

9. The system according to any one of the foregoing claims, wherein at least one braking device is in the braking and/or blocking position when it is not activated.

10. The system according to any one of the foregoing claims, including a first braking device (60) for blocking and a second braking device (70) for braking or slowing.

11. The system according to any one of the foregoing claims, wherein said at least one braking device (60; 70) includes a spring pressure brake, an electrically driven brake, a torsion spring brake, a centrifugal brake and/or a mechanical torque limiting brake.

12. A mobile vehicle (1), **characterized in that** it includes a stabilization system according to any one of the foregoing claims.
